(19)

Europäisches
Patentamt

European
Patent Office

Office européen
des brevets

(11) **EP 4 510 227 A2**

(12) **EUROPEAN PATENT APPLICATION**

(43) Date of publication:
**19.02.2025 Bulletin 2025/08**

(21) Application number: **24189986.3**

(22) Date of filing: **22.07.2024**

(51) International Patent Classification (IPC):
**H01M 4/36** *(2006.01)*     **H01M 4/38** *(2006.01)*
**H01M 4/587** *(2010.01)*     **H01M 10/052** *(2010.01)*
**H01M 4/02** *(2006.01)*

(52) Cooperative Patent Classification (CPC):
**H01M 4/366; H01M 4/364; H01M 4/386;**
**H01M 4/587; H01M 10/052;** H01M 2004/021

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.08.2023 KR 20230106679**
            **11.07.2024 KR 20240091839**

(71) Applicant: **SAMSUNG SDI CO., LTD.**
**Giheung-gu**
**Yongin-si, Gyeonggi-do**
**17084 (KR)**

(72) Inventors:
• **BAE, Juhye**
  **17084 Yongin-si, Gyeonggi-do (KR)**
• **PARK, Jin Seok**
  **17084 Yongin-si, Gyeonggi-do (KR)**
• **LEE, Taeil**
  **17084 Yongin-si, Gyeonggi-do (KR)**

(74) Representative: **Michalski Hüttermann & Partner**
**Patentanwälte mbB**
**Kaistraße 16A**
**40221 Düsseldorf (DE)**

(54) **NEGATIVE ELECTRODE FOR RECHARGEABLE LITHIUM BATTERY AND RECHARGEABLE LITHIUM BATTERY INCLUDING SAME**

(57)     Disclosed are a negative electrode for a rechargeable lithium battery and a rechargeable lithium battery including the same, and the negative electrode includes a current collector; a first active material layer on at least one surface of the current collector, and including a first active material, a second active material layer on the first active material layer, and including a second active material, and a third active material layer on the second active material layer, and including a third active material, wherein the first active material includes a first crystalline carbon, the second active material includes a Si-carbon composite, and the third active material includes a second crystalline carbon, wherein a porosity A of the first active material layer, a porosity B of the second active material layer, and a porosity C of the third active material layer satisfy a relationship of Equation 1 or Equation 2:

Equation 1

$$C \geq B > A$$

Equation 2

$$C > B \geq A.$$

**EP 4 510 227 A2**

**(Cont. next page)**

# FIG. 1

20

9

7

5

3

**Description**

**BACKGROUND**

**1. Field**

Embodiments of this disclosure relate to a negative electrode for a rechargeable lithium battery and a rechargeable lithium battery including the same.

**2. Description of the Related Art**

Recently, the rapid supplement of electronic devices such as mobile phones, laptop computers, and electric vehicles using batteries has resulted in surprising increases in demand for rechargeable batteries having relatively high capacity and lighter weight. Accordingly, research on improving performances of rechargeable lithium is being actively conducted.

Rechargeable lithium batteries include a positive electrode and a negative electrode which include an active material capable of intercalating and deintercalating lithium ions, and an electrolyte, and generate electrical energy due to the oxidation and reduction reaction if lithium ions are intercalated and deintercalated into the positive electrode and the negative electrode.

**SUMMARY**

One or more embodiments provide a negative electrode for a rechargeable lithium battery exhibiting excellent high-rate performances and a low resistance increase rate.

Some embodiments provide a rechargeable lithium battery including the negative electrode.

According to one or more embodiments, a negative electrode for a rechargeable lithium battery includes a current collector; a first active material layer on at least one surface of the current collector, and including a first active material, a second active material layer on the first active material layer, and including a second active material; and a third active material layer on the second active material layer, and including a third active material, the first active material includes a first crystalline carbon the second active material includes a Si-carbon composite, and the third active material includes a second crystalline carbon, wherein a porosity A of the first active material layer, a porosity B of the second active material layer, and a porosity C of the third active material layer satisfy a relationship of Equation 1 or Equation 2, is provided:

Equation 1

$$C \geq B > A$$

Equation 2

$$C > B \geq A.$$

According to one or more embodiments, a rechargeable lithium battery includes the negative electrode, a positive electrode including a positive active material, and a non-aqueous electrolyte.

Other embodiments are included in the following detailed description.

A negative electrode for a rechargeable lithium battery according to one or more embodiments may exhibit excellent high rate performances and a low resistance increase rate.

**BRIEF DESCRIPTION OF THE DRAWINGS**

The accompanying drawings, together with the specification, illustrate embodiments of the subject matter of the present disclosure, and, together with the description, serve to explain principles of embodiments of the subject matter of the present disclosure.

FIG. 1 is a schematic diagram showing a negative electrode for a rechargeable lithium battery according to one or more embodiments.

FIG. 2 to FIG. 5 are schematic views illustrating a rechargeable lithium battery according to one or more embodiments.

FIG. 6 is a SEM image for the negative electrode of Example 3.

FIG. 7 is a SEM image for the negative electrode of Comparative Example 1.

FIG. 8 is a graph showing a direct current internal resistance (DC-IR) of the battery according to Example 3 and Comparative Example 1.

## DETAILED DESCRIPTION

Hereinafter, embodiments of the present disclosure are described in more detail. However, these embodiments are examples, the present disclosure is not limited thereto and the present disclosure is defined by the scope of the appended claims and equivalents thereof.

As used herein, if a definition is not otherwise provided, it will be understood that if an element such as a layer, film, region, or substrate is referred to as being "on" another element, it may be directly on the other element or intervening elements may also be present.

Unless otherwise specified in the specification, expressions in the singular include expressions in plural. Unless otherwise specified, "A or B" may indicate "includes A, includes B, or includes A and B".

As used herein, the term "combination thereof' may include a mixture, a laminate, a complex, a copolymer, an alloy, a blend, or a reaction product of constituents (e.g., reactants).

As used herein, if a definition is not otherwise provided, a particle diameter may be an average particle diameter. Such a particle diameter may indicate an average particle diameter (D50) where a cumulative volume is about 50 volume% in a particle size distribution. The particle size (D50) may be measured by any suitable method generally used in the art, for example, by a particle size analyzer, and/or by a transmission electron microscopic image, and/or a scanning electron microscopic image. In some embodiments, a dynamic light-scattering measurement device is used to perform a data analysis, and the number of particles is counted for each particle size range, and from this, the average particle diameter (D50) value may be easily obtained through a calculation. The particle size may be measured by a laser diffraction method. The laser diffraction method may be performed by distributing particles to be measured in a distribution solvent and introducing it to a commercially available laser diffraction particle measuring device (e.g., MT 3000 available from Microtrac, Ltd.), irradiating ultrasonic waves of about 28 kHz at a power of about 60 W, and calculating an average particle diameter (D50) in the 50% standard of particle distribution in the measuring device.

In some embodiments, the porosity may be measured by a Barrett-Joyner-Halenda (BJH) method using a nitrogen adsorption method.

A negative electrode for a rechargeable lithium battery according to one or more embodiments includes a current collector and a negative active material layer, and the negative active material layer includes (or consists of) three layers including a first active material layer, a second active material layer, and a third active material layer.

The negative active material layer according to one or more embodiments includes a first active material layer on at least one surface of the current collector, a second active material layer on the first active material layer, and a third active material layer on the second active material layer.

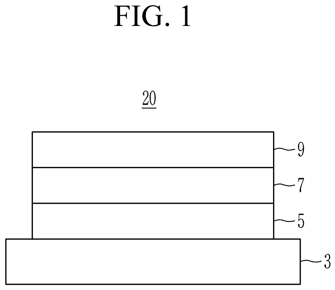

An embodiment of the negative electrode will be illustrated in more detail with reference to FIG. 1, in which the negative electrode 1 according to some embodiments includes a second active material layer 7 between a first active material layer 5 and a third active material layer 9. For example, the second active material layer 7 is included in the negative electrode as a middle layer, the first active material layer 5 is included in direct contact with a current collector 3 and the third active material layer 9 is on a surface of the second active material layer 7.

In one or more embodiments, the first active material layer includes a first active material, and the first active material may include a first crystalline carbon. In some embodiments, the first active material may be a first crystalline carbon.

The third active material layer includes a third active material and the third active material may include a second crystalline carbon. In some embodiments, the third active material may be a second crystalline carbon.

In some embodiments, in the first active material layer and the third active material layer, an active material may be crystalline carbon.

The crystalline carbon may be graphite such as unspecified shaped, sheet shaped, flake shaped, spherical shaped and/or fiber-shaped natural graphite and/or artificial graphite.

In one or more embodiments, the first crystalline carbon may be natural graphite and the second crystalline carbon may be artificial graphite. If the first crystalline carbon is natural graphite, low hardness thereof may further improve density, and if the second crystalline carbon is artificial graphite, high hardness thereof may secure high porosity.

The second active material layer includes a second active material, and the second active material may include a Si-carbon composite.

The inclusion of the Si-carbon carbon composite in the second active material layer may improve capacity, and as the Si-carbon composite is provided as the middle layer, the first active material layer and the third layer on the upper and the bottom may absorb the volume expansion of Si that occurs during charging and discharging, thereby maintaining the entire volume (e.g., substantially the entire volume) of the negative active material layer. For example, such effects for suppressing or reducing the volume expansion may be more effectively realized in crystalline carbon as the active material of the first active material layer and the third active material, compared to amorphous carbon or a mixture of amorphous carbon and crystalline carbon. While the present application is not limited to any particular mechanism or theory, it is believed that the foregoing occurs because the crystalline carbon has lower hardness than amorphous carbon, and thus, the volume expansion of Si may be effectively absorbed or reduced.

The negative electrode according to one or more embodiments may include crystalline carbon as active materials in the first active material layer and the third active material layer, and the Si-carbon composite as an active material in the second active material layer.

In the negative electrode having such a structure, if a porosity of the first active material layer is referred as A, a porosity of the second active material layer is referred as B, and a porosity of the third active material layer is referred as C, the porosities satisfy a relationship of Equation 1 or Equation 2.

Equation 1

$$C \geq B > A$$

Equation 2

$$C > B \geq A$$

For example, the porosity of the third active material layer may be identical to or larger than that of the second active material layer, and the porosity of the second active material layer may be identical to or larger than that of the first active material layer. In some embodiments, among the porosities of the first active material layer, the second active material layer, and the third active material layer, the porosity of the third active material layer C may be largest and the porosity of the first active material layer may be smallest.

If the porosity of the first active material layer A, the porosity of the second active material layer B, and the porosity of the third active material layer C satisfy the conditions disclosed herein, high-rate characteristics may be improved and the resistance increase rate may be reduced.

In one or more embodiments, if the porosity of the third active material layer C is the largest, for example, the relationship of Equation 2 is satisfied, the lithium ions movement path may be more effectively secured, and thus, lithium ions may be more effectively moved. This allows for further enhancement of high-rate characteristics and induces a more uniform reaction, thereby achieving a lower resistance increase rate.

If the porosity of the second active material layer B is largest, the contact area between the Si-carbon composite active materials may be reduced, making it impossible or very difficult to achieve high capacity. If the porosity of the first active material layer A is largest, it is difficult to secure a lithium ion path, and thus, high-rate characteristics may be deteriorated.

In one or more embodiments, the porosity of the first active material layer A may be about 5% to about 50%, about 5% to about 40%, or about 5% to about 20%.

The porosity of the second active material layer B may be about 5% to about 35%, about 5% to about 30%, or about 7% to about 20%.

The porosity of the third active material layer C may be about 3% to about 30%, about 6% to 27%, or about 10% to about 20%.

If the porosities of the first active material layer, the second active material layer, and the third active material layer satisfy Equation 1 or Equation 2, and each layer includes the porosities within the range of values disclosed herein, the volume expansion suppression or reduction effects may be suitably or sufficiently achieved, and the capacity may also be more increased.

In the negative electrode according to one or more embodiments, the silicon-carbon composite included in the second active material layer may include silicon particles and a carbon-based material. The silicon particles may be silicon nano particles. The carbon-based material may be amorphous carbon, or may be amorphous carbon and crystalline carbon.

In some embodiments, the silicon-carbon composite may include silicon nano particles and an amorphous carbon coating layer on the surface of the silicon nano particles.

The silicon-carbon composite may also include an agglomerated product where at least one silicon nano particle is agglomerated and an amorphous carbon coating layer on the surface of the agglomerated product.

The silicon nano particles may have a particle diameter of about 10 nm to about 1,000 nm, according to some embodiments, may be about 10 nm to about 200 nm, or about 20 nm to about 150 nm. If the average diameter of the silicon nano particle is within the ranges disclosed herein, the excessive volume expansion caused during charge and discharge may be suppressed or reduced, and a breakage of the conductive path due to crushing of the silicon nano particles may be prevented or reduced.

In the amorphous carbon coating layer, amorphous carbon may include soft carbon, hard carbon, mesophase pitch carbide, sintered cocks, or a combination thereof. The thickness of the amorphous carbon coating layer may be about 1 nm to about 2 $\mu$m, about 1 nm to about 500 nm, about 10 nm to about 300 nm, or about 20 nm to about 200 nm. If the thickness of the amorphous carbon coating layer is within the ranges disclosed herein, the volume expansion of silicon may be more well suppressed or reduced during charging and discharging.

The silicon-carbon composite may further include crystalline carbon. If the silicon-carbon composite further includes crystalline carbon, it may include an agglomerated product where silicon nano particles and crystalline carbon are agglomerated and an amorphous carbon coating layer on the surface of the agglomerated product.

The crystalline carbon may include unspecified shaped, sheet shaped, flake shaped, spherical shaped and/or fiber-shaped natural graphite and/or artificial graphite, or a combination thereof.

If the silicon-carbon composite includes silicon nano particles and an amorphous carbon coating layer, an amount of the silicon nano particles may be 30 wt% to 70 wt%, or about 40 wt% to about 65 wt% based on the total 100 wt% of the silicon-carbon composite. An amount of the amorphous carbon coating layer may be about 30 wt% to about 70 wt%, or about 35 wt% to about 60 wt% based on the total 100 wt% of the silicon-carbon composite.

If the silicon-carbon composite further includes crystalline carbon, an amount of the silicon nano particle may be about 20 wt% to about 70 wt% or about 25 wt% to about 65 wt% based on the total 100 wt% of the silicon-carbon composite. Based on the total 100 wt% of the silicon-carbon composite, an amount of the amorphous carbon may be about 25 wt% to about 70 wt% or about 25 wt% to about 60 wt%, and an amount of crystalline carbon may be about 1 wt% to about 20 wt%, or about 5 wt% to about 15 wt%.

The amorphous carbon may be soft carbon, hard carbon, mesophase, pitch carbon, sintered cokes, or a combination thereof.

In one or more embodiments, the second active material layer may further include crystalline carbon. For example, the second active material layer may include the silicon-carbon composite together with crystalline carbon as a negative active material. A mixing ratio of the silicon-carbon composite and the crystalline carbon may be about 9:91 to about 60:40 by a weight ratio, or about 9:91 to about 50:50 by a weight ratio. If the mixing ratio of the silicon-carbon composite and crystalline carbon is within the ranges disclosed herein, high-capacity or additional high-capacity may be obtained.

The first active material layer, the second active material layer, and the third active material layer may respectively include a binder, and may further include a conductive material (e.g., an electrically conductive material).

In the first active material layer, the second active material layer, and the third active material layer, an amount of each negative active material may be about 90 wt% to about 99 wt%, or about 94 wt% to about 99 wt% based on the total 100 wt% of each active material layer.

In the first active material layer, the second active material layer, and the third active material layer, an amount of the binder may be about 0.5 wt% to about 5 wt%, or about 0.5 wt% to about 3 wt% based on the total 100 wt% of each active material layer. In the first active material layer, the second active material layer, and the third active material layer, an amount of the conductive material may be about 0.5 wt% to about 5 wt%, or about 0.5 wt% to about 3 wt% based on the total 100 wt% of each active material layer.

The binder may serve to attach the negative electrode active material particles well to each other and also to attach the negative electrode active material well to the current collector. The binder includes a non-aqueous binder, an aqueous binder, or a combination thereof.

The non-aqueous binder may be polyvinyl chloride, carboxylated polyvinylchloride, polyvinylfluoride, ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acryl rubber, a butyl rubber, a fluorine rubber, polyethyleneoxide, polyvinyl pyrrolidone, polyepichlorohydrin, polyphosphazene, poly(meth)acrylonitrile, ethylene propylene diene copolymer, polyvinyl pyridine, chlorosulfonatedpolyethylene, latex, a polyester resin, a (meth)acryl resin, a phenol resin, an epoxy resin, polyvinyl alcohol, or a combination thereof.

The negative binder may include a cellulose-based compound, or may include the cellulose-based compound together with the aqueous binder. The cellulose-based compound includes one or more of carboxymethyl cellulose, hydroxypropyl methyl cellulose, methyl cellulose, and/or alkali metal salts thereof. The alkali metal may be Na, K, and/or Li. The cellulose-based compound may serve as a binder and may serve as thickener for imparting or increasing viscosity. The cellulose-based compound may be used at any suitable amount in the binder, and, for example, the amount thereof may be about 0.1 parts by weight to about 3 parts by weight based on 100 parts by weight of the negative active material.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material is included to provide electrode conductivity (e.g., electrical conductivity), and any suitable electrically conductive material may be used as a conductive material unless it causes a chemical change (e.g., causes an undesirable chemical change in the rechargeable lithium battery). Examples of the conductive material may be a carbon-based material such as natural graphite, artificial graphite, carbon black, acetylene black, ketjen black, a carbon fiber, a carbon nanofiber, a single-walled carbon nanotube, a multi-walled carbon nanotube, and the like; a metal-based material of a metal powder and/or a metal fiber including copper, nickel, aluminum, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal (e.g., an electrically conductive metal), and a combination thereof, but is not limited thereto.

## Preparation of negative electrode

The negative electrode according to one or more embodiments may be prepared by providing or forming a first active material layer, a second active material layer, and a third active material layer on a current collector.

Such a negative preparation may be performed by concurrently (e.g., simultaneously) coating a first active material layer composition, a second active material layer composition, and a third active material layer composition on the current collector, drying, and pressurizing the resultant. The concurrent (e.g., simultaneous) coating may be performed by sequentially coating the first active material layer composition, the second active material layer composition, and the third active material layer composition on the current collector.

In some embodiments, the coating may be performed by coating the first active material composition, drying and pressurizing the resultant to prepare the first active material layer, coating the second active material layer composition, drying, and pressurizing the resultant to prepare the second active material layer, and coating the third active material layer composition, drying, and pressurizing the resultant to prepare the third active material layer.

In one or more embodiments, the concurrent (e.g., simultaneous) coating process may be performed by using natural graphite included in the first active material layer composition as crystalline carbon, and using artificial graphite included in the third active material layer composition as crystalline carbon. Natural graphite is relatively softer than artificial graphite, so that the active material may be easily compressed (deformed) during pressurizing, and an active material layer having low porosity and high density may be prepared. Artificial graphite is relatively harder than natural graphite, and thus, porosity (or relatively higher porosity) may be secured during the pressurizing of the resultant.

The first active material layer, the second active material layer, and the third active material layer may be prepared by using an active material composition which is prepared by respectively mixing an active material, a binder, and optionally, a conductive material (e.g., an electrically conductive material) together in a solvent. The solvent may be an organic solvent, and the organic solvent may be N-methyl pyrrolidone, but is not limited thereto. If the aqueous binder is used as the binder, the solvent may be water.

## Rechargeable lithium battery

Some embodiments provide a rechargeable lithium battery including the negative electrode, a positive electrode, and an electrolyte.

## Positive electrode

The positive electrode may include a current collector and a positive active material layer on the current collector.

The positive active material layer may include a positive active material and may further include a binder and/or a conductive material (e.g., an electrically conductive material). For example, the positive electrode may further include an additive that may serve as a sacrificial positive electrode.

The positive active material may include a compound (lithiated intercalation compound) that is capable of intercalating and deintercalating lithium. In some embodiments, at least one selected from a composite oxide of lithium and a metal selected from cobalt, manganese, nickel, or combinations thereof may be used.

The composite oxide may be a lithium transition metal composite oxide. Examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

For example, a compound represented by any one of the following Chemical Formulas may be used. $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_{d-}G_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$

(0.90≤a≤1.8, 0.001≤b≤0.1); $Li_aMn_{1-b}G_bO_2$ (0.90≤a≤1.8, 0.001≤b≤0.1); $Li_aMn_2G_bO_4$ (0.90≤a≤1.8, 0.001≤b≤0.1); $Li_aMn_{1-g}G_gPO_4$ (0.90≤a≤1.8, 0≤g≤0.5); $Li_{(3-f)}Fe_2(PO_4)_3$ (0≤f≤2); $Li_aFePO_4$ (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and may be applied to a high-capacity, high-density rechargeable lithium battery.

In the positive electrode, an amount of the positive active material may be about 90 wt% to about 98 wt% based on the total weight of the positive active material layer. Amounts of the binder and the conductive material may be about 1 wt% to about 5 wt% based on the total weight of the positive active material layer.

The binder serves to attach the positive electrode active material particles well to each other and also to attach the positive electrode active material well to the current collector. Examples of the binder may include polyvinyl alcohol, carboxymethylcellulose, hydroxypropyl cellulose, diacetyl cellulose, polyvinyl chloride, carboxylated polyvinyl chloride, polyvinyl fluoride, a polymer including ethylene oxide, polyvinyl pyrrolidone, polyurethane, polytetrafluoro ethylene, polyvinylidene fluoride, polyethylene, polypropylene, styrene-butadiene rubber, (meth)acrylated styrene-butadiene rubber, an epoxy resin, (meth)acrylic resin, a polyester resin, nylon, and the like, as non-limiting examples.

The conductive material may be used to impart conductivity (e.g., electrical conductivity) to the electrode. Any suitable material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder and/or a metal fiber; a conductive polymer such as a polyphenylene derivative; or a mixture thereof.

Al may be used as the current collector, but is not limited thereto.

**Electrolyte**

The electrolyte includes a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, and may include a double bond, an aromatic ring, or an ether bond, and/or the like); amides such as dimethylformamide; dioxolanes such as 1,3-dioxolane, 1,4-dioxolane, and/or the like; sulfolanes, and/or the like.

The non-aqueous organic solvents may be used alone or in combination of two or more.

In some embodiments, if using a carbonate-based solvent, a cyclic carbonate and a chain carbonate may be mixed together and used, and the cyclic carbonate and the chain carbonate may be mixed together in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, Lil, $LiN(SO_3C_2F_5)_2$, $Li(FSO_2)_2N$ (lithium bis(fluorosulfonyl)imide (LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

**Separator**

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both surfaces of the porous substrate.

The porous substrate may be a polymer film formed of any one selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer and/or a (meth)acrylic polymer.

The inorganic material may include inorganic particles selected from $Al_2O_3$, $SiO_2$, $TiO_2$, $SnO_2$, $CeO_2$, $MgO$, $NiO$, $CaO$, $GaO$, $ZnO$, $ZrO_2$, $Y_2O_3$, $SrTiOs$, $BaTiOs$, $Mg(OH)_2$, boehmite, or a combination thereof, but is not limited thereto.

The organic material and the inorganic material may be mixed together in one coating layer, or a coating layer including an organic material and a coating layer including an inorganic material may be stacked together.

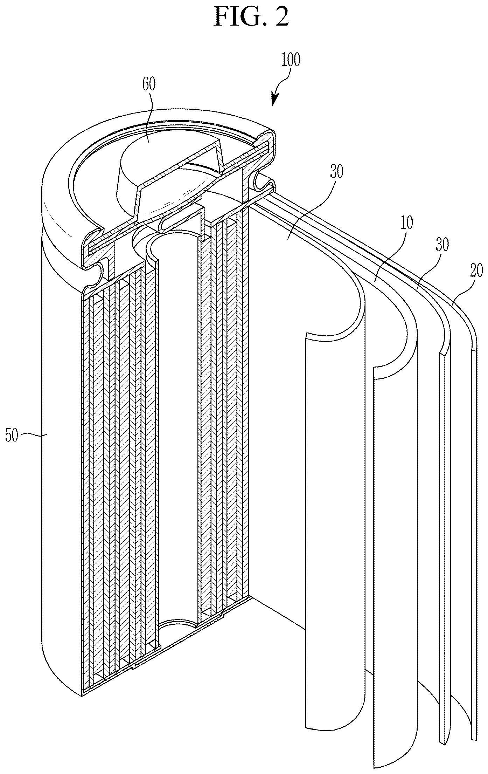

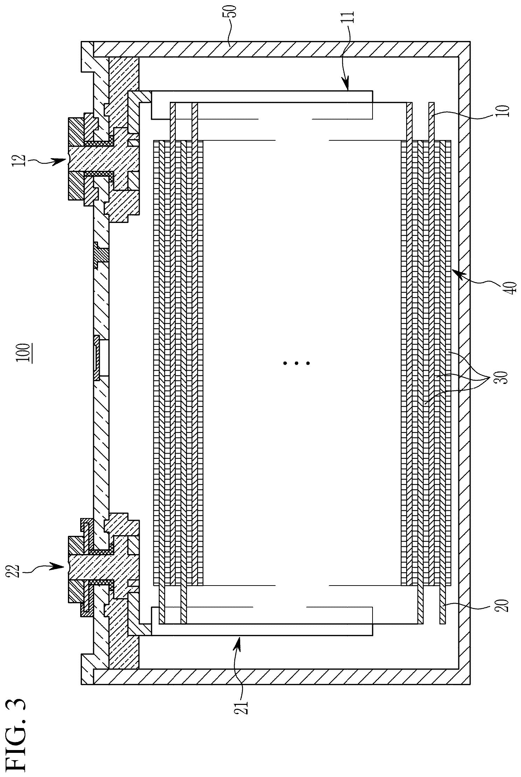

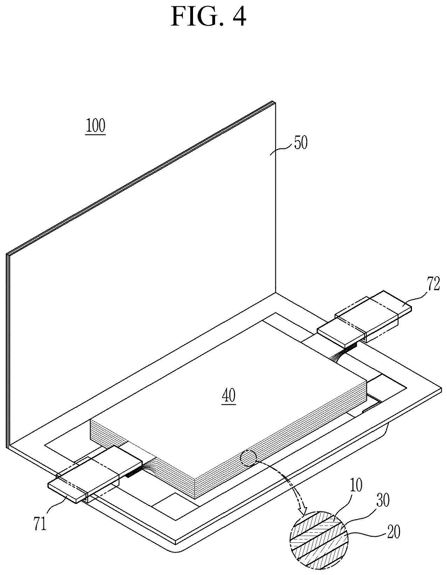

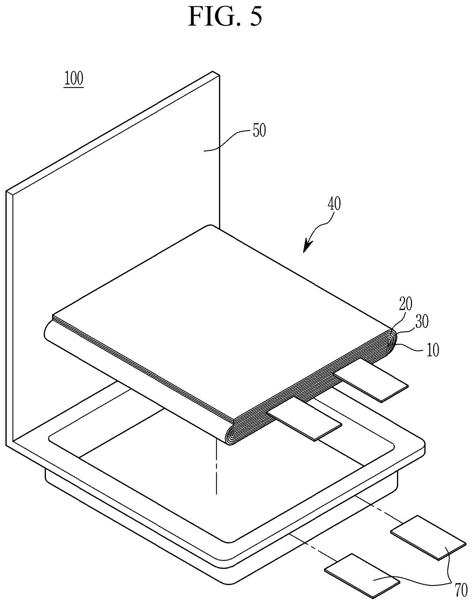

The rechargeable lithium battery may be classified into cylindrical, prismatic, pouch, or coin-type batteries, and/or the like depending on their shape. FIGS. 2-5 are schematic views illustrating a rechargeable lithium battery according to an embodiment. FIG. 2 shows a cylindrical battery, FIG. 3 shows a prismatic battery, and FIG 4. 3 and FIG. 5 show pouch-type batteries. Referring to FIGS. 2-5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIG. 4 and FIG. 5, the rechargeable lithium battery 100 may include an electrode tab 70, which may be, for example, a positive electrode tab 71 and a negative electrode tab 72 serving as an electrical path for inducing the current formed in the electrode assembly 40 to the outside. The rechargeable lithium battery according to an embodiment may be applied to automobiles, mobile phones, and/or various suitable types (or kinds) of electric devices, as non-limiting examples.

The following Examples and Comparative Examples are provided in order to highlight characteristics of one or more embodiments, but it will be understood that the Examples and Comparative Examples are not to be construed as limiting the scope of the embodiments, nor are the Comparative Examples to be construed as being outside the scope of the embodiments. Further, it will be understood that the embodiments are not limited to the particular details described in the Examples and Comparative Examples. The following Examples are example embodiments and the present disclosure is not necessarily limited thereto.

**Example 1**

97.46 wt% of natural graphite, 1.7 wt% of a styrene-butadiene rubber, 0.8 wt% of carboxymethyl cellulose, and 0.04 wt% of a single-walled carbon nanotube (SWCNT) were mixed together in a water solvent to prepare a first active material layer slurry.

20.46 wt% of a silicon-carbon composite, 77 wt% of artificial graphite, 1.7 wt% of a styrene-butadiene rubber, 0.8 wt% of carboxymethyl cellulose, and 0.04 wt% of a single-walled carbon nanotube (SWCNT) were mixed together in a water solvent to prepare a second active material layer slurry.

A silicon-carbon composite including an agglomerated product where silicon nano particles having an average particle diameter D50 of 100 nm and soft carbon were agglomerated, and a soft carbon coating layer on the agglomerated product was used, as the silicon-carbon composite. An amount of silicon nano particles was 54 wt% based on the total weight of the silicon-carbon composite, an amount of the soft carbon was 46 wt% based on the total weight of the silicon-carbon composite, and a thickness of the soft carbon coating layer was 100 nm.

97.46 wt% of artificial graphite 97.46 wt%, 1.7 wt% of a styrene-butadiene rubber, 0.8 wt% of carboxymethyl cellulose, and 0.04 wt% of a single-walled carbon nanotube (SWCNT) were mixed together in a water solvent to prepare a third active material layer slurry.

On a Cu foil current collector, the first active material layer slurry, the second active material layer slurry, and the third active material layer slurry were sequentially coated and dried followed by pressurizing to prepare a negative active material layer including a first active material layer, a second active material layer, and a third active material layer, thereby producing a negative electrode.

In the prepared negative electrode, the porosity of the first active material layer was 8%, the porosity of the second active material layer was 12%, and the porosity of the third active material layer was 12%. The porosity was measured by a Barrett-Joyner-Halenda (BJH) method using a nitrogen adsorption method.

97.8 wt% of a $LiNi_{0.91}Co_{0.07}Mn_{0.01}Al_{0.01}O_2$ positive active material, 1.1 wt% of a carbon conductive material, and 1.1 wt% of a polyvinylidene fluoride binder were mixed together in a N-methyl pyrrolidone solvent to prepare a positive active material layer slurry.

The positive active material layer slurry was coated on an Al foil current collector and dried followed by pressurizing to prepare a positive electrode.

Using the negative electrode, the positive electrode, and an electrolyte, a full cell was fabricated. The electrolyte was used by dissolving 1.5 M $LiPF_6$ in ethylene carbonate, ethylmethyl carbonate, and dimethyl carbonate (20:10:70 volume ratio).

**Example 2**

20.46 wt% of the silicon-carbon composite used in Example 1, 77 wt% of natural graphite, 1.7 wt% of a styrene-butadiene rubber, 0.8 wt% of carboxymethyl cellulose, and 0.04 wt% of a single-walled carbon nanotube (SWCNT) were mixed together in a water solvent to prepare a second active material layer slurry.

On a Cu foil current collector, the first active material layer slurry prepared by Example 1, the second active material layer slurry, and the third active material layer slurry prepared by Example 1 were sequentially coated and dried followed by pressurizing to prepare a negative active material layer including a first active material layer, a second active material layer, and a third active material layer, thereby producing a negative electrode.

In the prepared negative electrode, the porosity of the first active material layer was 10%, the porosity of the second active material layer was 10%, and the porosity of the third active material layer was 16%.

Using the negative electrode, a full-cell was fabricated by substantially the same procedure as in Example 1.

**Example 3**

20.46 wt% of the silicon-carbon composite used in Example 1, 77 wt% of a mixture of natural graphite and artificial graphite (a mixing ratio of natural graphite and artificial graphite: 50:50 weight ratio), 1.7 wt% of a styrene-butadiene rubber, 0.8 wt% of carboxymethyl cellulose, and 0.04 wt% of a single-walled carbon nanotube (SWCNT) were mixed together in a water solvent to prepare a second active material layer slurry.

On a Cu foil current collector, the first active material layer slurry prepared by Example 1, the second active material layer slurry, and the third active material layer slurry prepared by Example 1 were sequentially coated and dried followed by pressurizing to prepare a negative active material layer including a first active material layer, a second active material layer, and a third active material layer, thereby producing a negative electrode.

In the prepared negative electrode, the porosity of the first active material layer was 8%, the porosity of the second active material layer was 10%, and the porosity of the third active material layer was 14%.

Using the negative electrode, a full-cell was fabricated by substantially the same procedure as in Example 1.

**Comparative Example 1**

97.46 wt% of a mixture of natural graphite and artificial graphite (a mixing ratio of natural graphite and artificial graphite: 50:50 weight ratio), 1.7 wt% of a styrene-butadiene rubber, 0.8 wt% of carboxymethyl cellulose, and 0.04 wt% of a single-walled carbon nanotube (SWCNT) were mixed together in a water solvent to prepare a first active material layer slurry.

20.46 wt% of the silicon-carbon composite used in Example 1, 77 wt% of a mixture of natural graphite and artificial graphite (a mixing ratio of natural graphite and artificial graphite: 50:50 weight ratio), 1.7 wt% of a styrene-butadiene rubber, 0.8 wt% of carboxymethyl cellulose, and 0.04 wt% of a single-walled carbon nanotube (SWCNT) were mixed together in a water solvent to prepare a second active material layer slurry.

97.46 wt% of a mixture of natural graphite and artificial graphite (a mixing ratio of natural graphite and artificial graphite: 50:50 weight ratio), 1.7 wt% of a styrene-butadiene rubber, 0.8 wt% of carboxymethyl cellulose, and 0.04 wt% of a single-walled carbon nanotube (SWCNT) were mixed together in a water solvent to prepare a third active material layer slurry.

On a Cu foil current collector, the first active material layer slurry prepared by Example 1, the second active material layer slurry, and the third active material layer slurry prepared by Example 1 were sequentially coated and dried followed by pressurizing to prepare a negative active material layer including a first active material layer, a second active material layer, and a third active material layer, thereby producing a negative electrode.

In the prepared negative electrode, the porosity of the first active material layer was 10%, the porosity of the second active material layer was 10%, and the porosity of the third active material layer was 10%.

Using the negative electrode, a full-cell was fabricated by substantially the same procedure as in Example 1.

**Comparative Example 2**

On a Cu foil current collector, the first active material layer slurry prepared by Example 1, the second active material layer slurry prepared by Example 1, and the third active material layer slurry prepared by Comparative Example 1 were sequentially coated and dried followed by pressurizing to prepare a negative active material layer including a first active material layer, a second active material layer, and a third active material layer, thereby producing a negative electrode.

In the prepared negative electrode, the porosity of the first active material layer was 8%, the porosity of the second active material layer was 14%, and the porosity of the third active material layer was 10%.

Using the negative electrode, a full-cell was fabricated by substantially the same procedure as in Example 1.

**Comparative Example 3**

On a Cu foil current collector, the first active material layer slurry prepared by Example 1, the second active material layer slurry prepared by Example 3, and the third active material layer slurry prepared by Example 1 were sequentially coated and dried followed by pressurizing to prepare a negative active material layer including a first active material layer, a second active material layer, and a third active material layer, thereby producing a negative electrode.

In the prepared negative electrode, the porosity of the first active material layer was 14%, the porosity of the second active material layer was 10%, and the porosity of the third active material layer was 8%.

Using the negative electrode, a full-cell was fabricated by substantially the same procedure as in Example 1.

**Experimental Example 1) Evaluation of SEM**

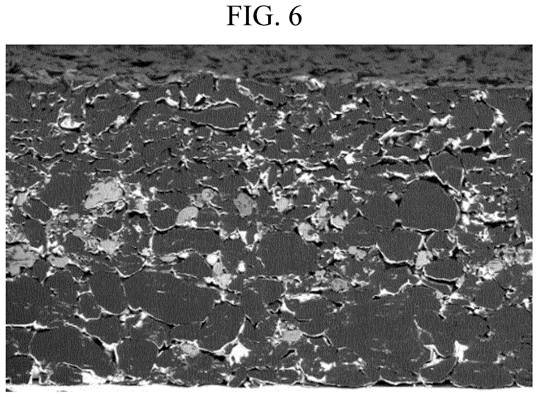

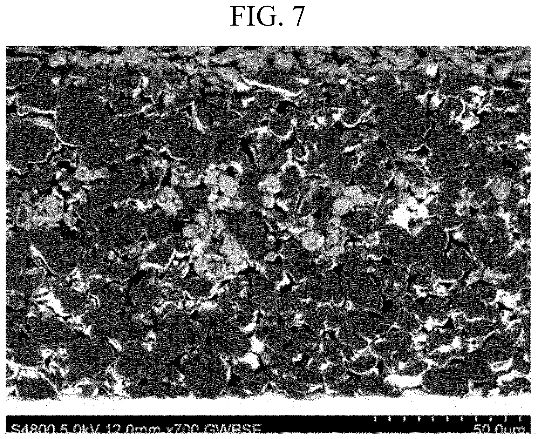

The SEM images of the negative active material according to Example 3 and Comparative Example 1 are shown in FIG. 6 and FIG. 7, respectively. It can be seen from FIG. 6 and FIG. 7 that the surface of the negative active material of Example 3 is almost similar to surface of Comparative Example 1.

**Experimental Example 2) Evaluation of high-rate characteristic**

The half-cells according to Examples 1 to 3 and Comparative Examples 1 to 3 were charged and discharged at a room temperature (25 °C, RT). The test was performed by using two half-cells each of Examples 1 to 3 and Comparative Examples 1 to 3. The charging was performed under the following conditions and the discharge was performed by performing at each C-rate under the conditions, while changing the C-rate to 0.2 C, 0.5 C, 1.0 C, 1.5 C, 2 C, 2.5 C, and 0.2 C. The charge and discharge were performed three cycles at each C-rate, for a total 21 cycles.

A ratio of discharge at each C-rate relative to discharge capacity at 0.2 C 0.2 C once was calculated. The results are shown in Table 1.

Charge: constant current/constant voltage, 0.2 C, 4.3 V, 0.05 C cut-off, pausing for 10 minutes

Discharge: constant current 0.2 C/0.5 C/ 1.0 C/ 1.5 C/ 2 C/2.5 C/0.2 C 2.8 V cut-off, pausing for 10 minutes.

(Table 1)

|  | 0.2 C | 0.5 C | 1.0 C | 1.5 C | 2.0 C | 2.5 C |
|---|---|---|---|---|---|---|
| Example 1 | 100% | 97% | 80% | 56% | 33% | 25% |
| Example 2 | 100% | 97% | 79% | 55% | 35% | 24% |
| Example 3 | 100% | 97% | 80% | 58% | 33% | 25% |
| Comparative Example 1 | 100% | 97% | 77% | 40% | 25% | 20% |
| Comparative Example 2 | 100% | 96% | 75% | 38% | 22% | 18% |
| Comparative Example 3 | 100% | 92% | 70% | 30% | 20% | 17% |

As shown in Table 1, the high-rate characteristics of Examples 1 to 3 are superior to that of Comparative Examples 1 to 3.

**Experimental Example 3) Evaluation of DC internal resistance (DC-IR: Direct current internal resistance)**

The rechargeable lithium cells according to Examples 1 to 3 and Comparative Examples 1 to 3 were charged and discharged at 0.5 C under a room temperature of 25 °C for 60 cycles, 0.33 C charge and 0.33 C discharge once, and then discharged for 10 seconds at 0.33 C under SOC50 (state of charge, charged to be 50% of charge capacity, if the total charge capacity was 100%).

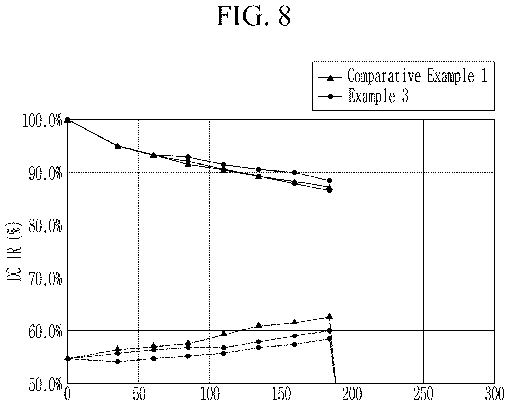

If resistance before charging and discharging was considered as 100%, a ratio of the measured resistance at each charge and discharge cycle was measured. Among these results, results of Example 3 and Comparative Example 1 are shown in FIG. 8, as a dotted line. A ratio of discharge capacity at each cycle relative to the discharge capacity at the 1st cycle was calculated. Among these results, the results of Example 3 and Comparative Example 1 are shown in FIG. 8, as solid lines. The results of FIG. 8 were obtained from fabricating two cells each according to Example 3 and Comparative Example 1.

As shown in FIG. 8, Example 3 exhibited a lower resistance increase rate after repeated cycles than Comparative Example 1.

While the subject matter of this disclosure has been described in connection with what is presently considered to be practical example embodiments, it is to be understood that the present disclosure is not limited to the disclosed embodiments, but, on the contrary, is intended to cover various modifications and equivalent arrangements included within the spirit and scope of the appended claims, and equivalents thereof. Therefore, the aforementioned embodiments should be understood to be examples but not limiting the present disclosure in any way.

**Claims**

1. A negative electrode (1) for a rechargeable lithium battery, comprising:

   a current collector (3);
   a first active material layer (5) on at least one surface of the current collector (3), and comprising a first active material;
   a second active material layer (7) on the first active material layer (5), and comprising a second active material; and
   a third active material layer (9) on the second active material layer (7), and comprising a third active material,
   wherein the first active material comprises a first crystalline carbon,
   wherein the second active material comprises a Si-carbon composite, and
   wherein the third active material comprises a second crystalline carbon,
   wherein a porosity A of the first active material layer (5), a porosity B of the second active material layer (7), and a porosity C of the third active material layer (9) satisfy a relationship of Equation 1 or Equation 2:

   Equation 1

   $$C \geq B > A$$

   Equation 2

   $$C > B \geq A.$$

2. The negative electrode (1) for a rechargeable lithium battery as claimed in claim 1, wherein the porosity A of the first active material layer (5), the porosity B of the second active material layer (7), and the porosity C of the third active material layer (9) satisfy a relationship of Equation 3:

   Equation 3

   $$C > B > A.$$

3. The negative electrode (1) for a rechargeable lithium battery as claimed in claim 1 or 2, wherein the porosity of the first active material layer (5) is about 5% to about 50%.

4. The negative electrode (1) for a rechargeable lithium battery as claimed in any of the claims 1 to 3, wherein the porosity of the second active material layer (7) is about 5% to about 35%.

5. The negative electrode (1) for a rechargeable lithium battery as claimed in any of the claims 1 to 4, wherein the porosity of the third active material layer (9) is about 3% to about 30%.

6. The negative electrode (1) for a rechargeable lithium battery as claimed in any of the claims 1 to 5, wherein the first active material is the first crystalline carbon, and
the third active material is the second crystalline carbon.

7. The negative electrode (1) for a rechargeable lithium battery as claimed in any of the claims 1 to 6, wherein the first crystalline carbon comprises artificial graphite and the second crystalline carbon comprises natural graphite.

8. The negative electrode (1) for a rechargeable lithium battery as claimed in any of the claims 1 to 7, wherein the second active material layer (7) further comprises a crystalline carbon.

9. The negative electrode (1) for a rechargeable lithium battery as claimed in any of the claims 1 to 8, wherein the second active material layer (7) comprises the Si-carbon composite and the crystalline carbon at a weight ratio of about 90:10 to about 95:5.

10. The negative electrode (1) for a rechargeable lithium battery as claimed in any of the claims 1 to 9, wherein the Si-carbon composite comprises silicon nano particles and amorphous carbon.

11. The negative electrode (1) for a rechargeable lithium battery as claimed in any of the claims 1 to 10, wherein the Si-carbon composite comprises secondary particles in which silicon primary particles are agglomerated and amorphous carbon on surfaces of the primary particles and the secondary particles.

12. The negative electrode (1) for a rechargeable lithium battery as claimed in any of the claims 1 to 11, wherein the Si-carbon composite further comprises a crystalline carbon.

13. The negative electrode (1) for a rechargeable lithium battery as claimed in any of the claims 1 to 12, wherein the Si-carbon composite further comprises crystalline carbon.

14. A rechargeable lithium battery (100), comprising:

the negative electrode (1) as claimed in any one of claim 1 to claim 13;
a positive electrode (10) comprising a positive active material; and
a non-aqueous electrolyte.

# FIG. 1

# FIG. 2

FIG. 3

EP 4 510 227 A2

# FIG. 4

FIG. 5

FIG. 6

## FIG. 7

S4800 5.0kV 12.0mm x700 GWBSE 50.0um

FIG. 8